(19) **Europäisches Patentamt / European Patent Office / Office européen des brevets**

(11) **EP 4 717 095 A1**

(12) **EUROPEAN PATENT APPLICATION**
published in accordance with Art. 153(4) EPC

(43) Date of publication:
01.04.2026 Bulletin 2026/14

(21) Application number: 24811050.4

(22) Date of filing: 17.05.2024

(51) International Patent Classification (IPC):
*A23L 27/00* (2016.01)       *A23L 2/00* (2006.01)
*A23L 2/02* (2006.01)        *A23L 2/385* (2006.01)

(52) Cooperative Patent Classification (CPC):
**A23L 2/00; A23L 2/02; A23L 2/385; A23L 2/52;**
**A23L 2/56; A23L 27/00**

(86) International application number:
**PCT/JP2024/018288**

(87) International publication number:
**WO 2024/242043 (28.11.2024 Gazette 2024/48)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **23.05.2023 JP 2023084606**

(71) Applicant: **Kikkoman Corporation**
**Noda-shi, Chiba 278-8601 (JP)**

(72) Inventor: **MARUSHIMA, Kazuya**
**Noda-shi, Chiba 278-8601 (JP)**

(74) Representative: **TBK**
**Bavariaring 4-6**
**80336 München (DE)**

(54) **NON-ALCOHOLIC BEVERAGE AND METHOD FOR PRODUCING SAME**

(57)    Problem: To provide a wine-flavored non-alcoholic beverage that can be easily prepared by diluting a genuine non-alcoholic beverage having good compatibility with cuisines such as Japanese food, Western food, and Chinese food with various fruit juices and the like; and a method for producing the same.

Solving Solution: Raw materials of the beverage include star anise, black pepper, and dried bonito flakes. By subjecting immersion mixed water obtained by immersing the raw materials in water at 80°C to 130°C to heated extraction, and then to solid-liquid separation, a heated water extract liquid of the raw materials, which serves as a base of the non-alcoholic beverage, can be obtained. When this beverage is diluted with various fruit juices and the like, it becomes a red wine-flavored non-alcoholic beverage.

## Description

### TECHNICAL FIELD

The present invention relates to a non-alcoholic beverage that enables a wine-flavored non-alcoholic drink to be easily prepared by being mixed with various fruit juices and the like.

### BACKGROUND ART

Wine is a brewed liquor in which a good balance of sourness, astringency, and bitterness is maintained by adding umami components formed in a fermentation process of a grape juice. It is the most widely consumed alcoholic beverage in the world and the only alkaline beverage among alcoholic beverages. It is known that drinking the wine with meals such as eating out makes meals delicious and increases appetite.

Since it is difficult to select a wine that matches a preference or a meal from a large number of commercially available wines, because of a wine having unique aroma components depending on a grape variety, a wine expert recommends and serves a wine that is a good match for a customer's preference or a cuisine in a restaurant. Recently, wine pairing in which a wine having good compatibility is combined for each cuisine and provided in a glass has become popular.

In recent years, young people have a non-alcoholic orientation and do not drink alcoholic beverages much. In addition, since there are consumers who cannot drink alcoholic beverages due to reasons such as being not a good match for an alcohol, driving a car, and being pregnant, there is a demand for non-alcoholic beverages as a substitute for the alcoholic beverages. The same tendency is also observed in drinks provided in restaurants. Although the quality of beer among the non-alcoholic beverages has improved year by year and has penetrated into consumers, and the market for beer has expanded. As to wine, various alcoholfree wines have been developed and produced for non-alcoholic wines, but consumer-satisfying quality wines are still hard to obtain.

As a method for producing a non-alcoholic wine, for example, it has been reported that an alcohol is removed from a wine through vacuum distillation (vacuum concentration) (Patent Document 1 or 2). With such a method, it is not possible to completely remove the alcohol, resulting in a beverage that still includes a trace amount of the alcohol. Moreover, during the vacuum distillation (vacuum concentration) process, some of the aromatic compounds unique to the wine are lost, leading to a poor balance of flavors, and a flavor that differs from the flavor of the original wine flavor.

On the other hand, a wine-style beverage produced by a method other than the removal of the alcohol from the wine has been proposed. Patent Document 3 describes a non-alcoholic wine obtained by using a cold water-extracted green tea extract liquid as a main raw material and adding a fruit juice to the extract liquid, and Patent Document 4 describes a wine-style beverage that includes a grape juice, a berry juice, a tea extract derived from black tea, and succinic acid, and has wine-like aroma, astringency, and savor.

In addition, Patent Document 5 describes a non-alcoholic beverage base liquid including a heated water extract liquid of raw materials including bay leaves, kelp, and cardamom, or a heated water extract liquid of raw materials including star anise, cinnamon, and black pepper, which forms a white wine-like non-alcoholic wine or a red wine-like non-alcoholic wine, respectively, by being mixed with a fruit juice.

Among the alcoholic beverages, a wine is particularly notable for enhancing the taste of a cuisine, making the compatibility with the cuisine crucial. Therefore, there is a demand for a wine-like non-alcoholic drink that is a good match for various cuisines and allows people who cannot or do not drink alcohol to enjoy meals by pairing the beverage with a cuisine at restaurants.

Citation List

Patent Documents

Patent Document 1: U.S. Patent No. 4643083
Patent Document 2: European Patent Application Publication No. 58634
Patent Document 3: Japanese Patent Application Laid-Open No. 2011-147386
Patent Document 4: Japanese Patent No. 5924919
Patent Document 5: Japanese Patent No. 7311676

### SUMMARY

Technical Problem

An object of the present invention is to provide a non-alcoholic beverage that can be easily prepared by mixing with various fruit juices and the like, where the non-alcoholic beverage is selected as a wine-flavored non-alcoholic beverage that can be enjoyed at home, and preferably as a pairing beverage at a time of dining at restaurants with the cuisines as a genuine wine-flavored non-alcoholic beverage having good compatibility with cuisines such as Japanese food, Western food, and Chinese food, ; and a method for producing the same.

Solution to Problem

The present inventors have found that a richly flavored non-alcoholic beverage can be obtained by selecting spices and the like that are optimum as raw materials of a non-alcoholic beverage having a red wine flavor, and subjecting immersion mixed water obtained by immersing the spices in water to heated extraction, thereby completing the present invention.

In addition, the present invention relates to a non-alcoholic beverage having high storage stability, which can be obtained by immersing raw materials including specific spices and the like in water, and subjecting the immersion mixed water to heated extraction at 80°C to 130°C, and then to solid-liquid separation; and a method for producing the same. Although heated extraction is typically avoided due to concerns about loss of flavor and aroma, it enables the production of a richly flavored beverage, which can be stored at normal temperature. By mixing this non-alcoholic beverage with various fruit juices, a wine-flavored non-alcoholic beverage having good compatibility with various cuisines such as Japanese food, Western food, and Chinese food can be easily prepared.

The present invention relates to the following (1) to (7) methods for producing a non-alcoholic beverage, (8) and (9) non-alcoholic beverages, or (10) a wine-flavored non-alcoholic beverage.

(1) A method for producing a non-alcoholic beverage, the method including:
subjecting immersion mixed water obtained by immersing raw materials including star anise, black pepper, and dried bonito flakes in water to heated extraction, and then to solid-liquid separation.
(2) The production method according to (1),
in which the heated extraction is performed at 80°C to 130°C.
(3) The production method according to (1) or (2),
in which the heated extraction is performed in a sealed container.
(4) The production method according to any one of (1) to (3),
in which the raw materials include 0.5 to 5 parts by weight of the black pepper and 0.03 to 0.4 parts by weight of the dried bonito flakes with respect to 1 part by weight of the star anise.
(5) The production method according to any one of (1) to (4),
in which the raw materials further include cinnamon.
(6) The production method according to (5),

in which the star anise, the cinnamon, and the black pepper of the raw materials are dried whole spices, and the dried bonito flakes are powdered.

(7) The production method according to any one of (1) to (6),
in which the non-alcoholic beverage acquires a wine flavor upon addition of a fruit juice.
(8) A non-alcoholic beverage including:
a heated water extract liquid of raw materials including star anise, black pepper, and dried bonito flakes.
(9) The non-alcoholic beverage according to (8),
in which the raw materials further include cinnamon.
(10) A wine-flavored non-alcoholic beverage including:

the non-alcoholic beverage according to (8); and
a fruit juice.

In addition, the present invention includes the following aspects of (11) to (15).
(11) The production method according to (5),
in which the raw materials further include the cinnamon in an amount of 4 parts by weight or less with respect to 1 part by weight of the star anise.
(12) The production method according to any one of (1) to (7),
in which the raw materials include 0.5 to 5 parts by weight of the black pepper, 0.03 to 0.4 parts by weight of the dried bonito flakes, and 0 to 4 parts by weight of the cinnamon with respect to 1 part by weight of the star anise.

(13) The production method according to any one of (1) to (7),
in which the immersion mixed water is subjected to heated extraction in a sealed container with an Fo value of 0.0078 or more.

(14) The production method according to (13),
in which the heated extraction is performed at 80°C to 130°C.

(15) A non-alcoholic beverage produced by the production method according to any one of (1) to (7).

Advantageous Effects of Invention

The non-alcoholic beverage of the present invention is a non-alcoholic beverage having specific spices and the like as raw materials, and by diluting this beverage with a fruit juice and the like, a genuine red wine-flavored non-alcoholic beverage having good compatibility with a wide variety of cuisines such as Japanese food, Western food, and Chinese food can be easily prepared.

In order to prevent the loss of the components and aroma of tea leaves or herbs, an extract liquid of the tea leaves or herbs used for production of a wine-style beverage is generally extracted with water as described in Patent Documents 3 and 4. In the present invention, since the production is made by heated water extraction, it is considered that the aroma and the flavor of the spice would be lost and weakened, but it was an unexpected effect that the flavored taste was maintained or enhanced as compared with water extraction.

Furthermore, since the heating enables normal-temperature storage and normal-temperature distribution, anyone can easily prepare a wine-flavored non-alcoholic beverage anywhere only by mixing the beverage of the present invention with a fruit juice. A red wine-flavored non-alcoholic beverage has a rich flavor that feels thickness due to tannins in the red wine.

A flavored taste component obtained by heated water-extraction from the specific spice of the present invention is considered to have not only good compatibility with the material and the seasoning of the cuisine but also good compatibility with various cuisines since the flavored taste component of specific spices enables mouth refreshment by counteracting residual oils, fats, carbohydrates, and the like in the mouth during consumption of the cuisines. Thus, a new type of non-alcoholic beverage that is a good match for cuisine can be obtained even by dilution of the flavored taste component with water, carbonated water, or the like. In addition, when the spices in the immersion mixed water are produced in a small amount, a straight beverage is obtained.

## DESCRIPTION OF EMBODIMENTS

The raw materials of the non-alcoholic beverage of the present invention include star anise, black pepper, and dried bonito flakes, and preferably include cinnamon. All the other components other than the dried bonito flakes are spices.

The star anise is a spice obtained by drying the fruit of a tree called Illicium verum, which is native to China. It is also called hakkaku in Japanese, has a strong and sweet unique aroma, and is often used in Chinese cuisine. The black pepper is a spice obtained by drying peppercorns with the skins still on before they are fully ripe, and has black color, strong pungency, and high aroma. It is in a whole, coarse ground, or finely ground form.

The dried bonito flakes are a preserved food obtained by boiling bonito meat and then drying the meat, and are generally used for making a soup stock by shaving the dried bonito flakes. Although the dried bonito flakes thus shaved may be used, the dried bonito flakes are preferably powdered, and Sodabushi can be used instead of the dried bonito flakes.

The cinnamon is a spice obtained from the inner bark of a plurality of trees of the genus Cinnamomum, and has a cinnamon stick or powdery form, with the cinnamon stick in an appropriate size being preferable.

Other spices or herbs can be added to the raw materials of the beverage in order to change the taste and aroma of a non-alcoholic beverage. Examples thereof include lavender, sage, coriander, fennel, hyssop, oregano, white pepper, pink pepper, cumin, clove, nutmeg, Melissa, chamomile, peppermint, spearmint, rosemary, vanilla, orange peel, lemon peel, lemon balm, tarragon, thyme, valerian, jasmine, yuzu peel, chives, agrimony, avens, betony, juniper, costmary, eyebright, gentian, mugwort, alkanet, chervil, marjoram, savory, pennyroyal, and hibiscus.

A guideline of a suitable formulation proportion of star anise, black pepper, dried bonito flakes, and cinnamon included in raw materials of a beverage is 0.5 to 5 parts by weight of the black pepper, 0.03 to 0.4 parts by weight of the dried bonito flakes, and 0 to 4 parts by weight of the cinnamon with respect to 1 part by weight of the star anise. In a case where other spices and the like are further added to the raw materials, the formulation proportion of the star anise, the black pepper, the dried bonito flakes, or the cinnamon can be changed from the guideline in consideration of a balance with such other spices and the like.

The spices included in the raw materials of the beverage are preferably dried whole spices. When the raw materials are in a powdery form, fine powder remains in the base liquid even with filtration after heated extraction, which affects the quality, making the operation of solid-liquid separation complicated.

When these raw materials are immersed in water, the amount of the raw materials in water is about 1% to 14% by weight, and preferably 1% to 11% by weight, but can be changed depending on heating conditions. When the amount of the raw materials is too large, the taste of the base liquid is felt to be spicy, astringent, and bitter, and the compatibility with cuisines is also deteriorated.

The water used for immersing the raw materials in the present invention is not particularly limited as long as it is suitable for drinking or eating. For example, hard water, soft water, mineral water, tap water, well water, purified water, and the like can be used, and the mineral water is preferably used.

First, water and raw materials are put into a container to immerse the raw materials in water, and the container including the raw materials and water therein is preferably sealed and heated to extract the raw materials. When the heated extraction is performed in a sealed state, a volatile aromatic component is efficiently extracted without scattering, and thus, a base liquid having a rich flavor can be obtained.

The sealed container may be any pot or kettle as long as it can be sealed. In addition, when the heating is performed at 100°C or higher, a known sealed container having a structure that can withstand heating and pressurization is used since the heating is carried out under pressurization. For example, a heat-resistant container such as a retort-resistant pouch can be used, containers that are filled with water and raw materials and sealed are arranged in a retort tank, and the temperature of the retort tank is raised to about 120°C with steam, hot water, or the like to perform a heating treatment. In order to remove oxygen in the headspace during sealing, an inert gas such as a nitrogen gas may be filled.

In the present invention, it is preferable that a sealed container containing the immersion mixed water is heated at 80°C or higher and 130°C or lower to perform extraction. The heated extraction temperature means a set temperature of a sealed container.

In a case where the heated extraction temperature is 80°C or higher and lower than 100°C, it is not particularly necessary to pressurize. In a case where the heated extraction temperature is about 95°C, a base liquid having a better flavor can be obtained than so-called water extraction of raw materials obtained by immersing the raw materials in water and in a refrigerator for 3 to 6 days.

In a case where the heated extraction temperature is 100°C or higher, a pressure is applied, but it is suitable that the pressure during the extraction is 0.01 MPa or more and 1 MPa or less in terms of gauge pressure. When the pressure is 0.01 MPa or more, the flavored taste of the raw materials can be more reliably extracted, and thus it is preferable that the pressure is 0.1 MPa or more. When the pressure is too high, the aroma is likely to be lost and the astringency is also likely to occur, and thus it is preferable that the pressure is 1 MPa or less. The heated extraction temperature during pressurization is 130°C or lower.

In the present invention, the heating is preferably with an Fo value in the heated extraction of 0.0078 to 50, and the heating time at which the Fo value is in this range is determined by the heating temperature. The heating time is usually 1 minute or more and 110 minutes or less.

When the heating temperature is 80°C or higher and 130°C or lower and the Fo value is 0.0078 to 50, a base liquid having a sufficient spice aroma as well as a good balance of tastes and good compatibility with a cuisine can be obtained. Even with the Fo value in a range of 0.0078 to 50, the base liquid obtained at a heating temperature of lower than 80°C has neither favorable aroma nor good compatibility with cuisines.

For example, as raw materials of a beverage, 1 g of star anise, 1 g of black pepper, 0.1 g of dried bonito flakes, and 1 g of cinnamon are mixed with about 150 ml of preparation water, and then the mixture is filled and sealed in an aluminum laminate bag having retort resistance and heated in a temperature range of 80°C to 121°C for 10 minutes to 40 minutes. Next, when the base liquid is cooled to room temperature after heating, by filtering each test liquid with filter paper, it is subjected to sensory evaluation. The result is the Fo value is preferably 0.0078 to 50, more preferably 0.023 or more, and still more preferably 0.23 or more for the heating temperature and time.

[Fo Value]

The "F value" is a value representing a sterilization effect in all heating and sterilization treatment steps from a temperature rise to a temperature fall, in terms of a sterilization time (minutes) at a reference temperature, and can be calculated by the following formula (see, for example, Bulletin No. 15 of the Tokyo Metropolitan Food Technology Center).

$$F = t \times 10^{((T - To)/Z)}$$

T: Temperature (°C) during heating and sterilization treatments
To: Reference temperature (°C)
t: Time (minutes)

Z: Temperature (°C) at which a D value (time (minutes) taken to reduce a viable cell count to 1/10) is set to 1/10

The F value changes depending on the reference temperature and a Z value that is a parameter of the heat resistance of a microorganism. Therefore, the F value, when the reference temperature is set to 121.1°C and the Z value is set to 10°C, is referred to as an "Fo value".

The Fo value is calculated by the following formula (see, for example, Thermal Sterilization of Packaged Foods (Theory and Application) (published by the Japan Canners Association))).

$$Fo = t \times 10^{\wedge} ((T - 121.1)/10)$$

The Fo value is an indicator of an ability to inactivate microorganisms in moist heat sterilization. For example, the Fo value of the heating and sterilization treatment at 110°C for 9 minutes is 0.70, as applied to the formula. Furthermore, this value is a value in a case where the temperature instantly reaches 110°C and is instantly cooled after 9 minutes. In practice, the Fo value is calculated and output by a heating and sterilization device every certain period of time during the heating and sterilization treatment. Therefore, even when the heating and sterilization device indicates the Fo value of 0.70, this does not necessarily mean that the temperature and the time have reached the above-described numerical values.

The spices are subjected to heated extraction in water, and then the immersion mixed water is subjected to solid-liquid separation to obtain a clear base liquid. As means for solid-liquid separation, known means such as filtration, centrifugation, filter pressing, and screw pressing can be used. The obtained base liquid is filled in a container and stored in a sealed state so that volatile flavored taste components are not dispersed. The container is not particularly limited as long as it can be sealed and filled, but a container that can be aseptically filled and can be distributed at normal temperature after the filling and sterilization treatment is preferable. In addition, an opaque container that can suppress browning due to light may be used.

By mixing the obtained beverage with a fruit juice, a wine-flavored non-alcoholic drink having a unique wine flavor can be prepared. The proportion of the fruit juice to the beverage depends on the type and concentration of the base liquid or the fruit juice, but is usually approximately 1 to 3:3 to 1.

When a cranberry juice is used for a red wine-flavored non-alcoholic drink, beverages having a taste, an aroma, and a color closer to the color of a red wine can be obtained. In addition, juices that are used in cocktails and have a high anthocyanin content, for example, berry juices such as elderberry, bearberry, blackberry, blueberry, boysenberry, cherry, grape, gooseberry, huckleberry, loganberry, olallieberry, raspberry, sloe berry, and strawberry, and a grape juice, can be used. One kind of the fruit juice may be used alone, or two or more kinds of the fruit juices may be used in combination.

In addition, a non-alcoholic drink having a new taste can be obtained by diluting a beverage with a carbonated beverage, water, carbonated water, or the like, in addition to the fruit juices.

In this way, by diluting the beverage with a fruit juice or the like, a genuine non-alcoholic beverage having good compatibility with a wide variety of cuisines such as Japanese food, Western food, and Chinese food can be created.

[Examples]

Next, the present invention will be described in more detail with reference to Examples. Furthermore, the present invention is not limited by the following Test Examples.

<Sensory Test Method and Sensory Evaluation Method>

The sensory evaluation was carried out by three well-trained sensory evaluators including one sommelier. In the test, the balance of flavors was compared and the compatibility was compared using cheese in advance, using Test Examples 1, 2, and 6 described in Table 1.

(1) Evaluation Standard for Balance of Flavored Taste of Test Liquid (Balance of Flavors of Red Wine-Flavored Non-Alcoholic Beverage)

The balance of aromas and flavors of the spice of each test liquid was evaluated by sniffing the aroma to evaluate the balance of aromas, and then putting the test liquid in the mouth to evaluate the balance of flavors.

The evaluation was performed by three evaluators according to a 4-point method shown below, the average point of the respective points for the balance of aromas and flavors was determined, and the total point of the average evaluation points was set as "×" for less than 4.5 points, "△" for 4.5 points or more and less than 5.5 points, "○" for 5.5 points or more and less than 7.5 points, and "◎" for 7.5 points or more.

1 Point: The aroma or taste of a specific spice is strong, and the balance of flavored tastes is poor.

2 Points: The aroma or flavor of the specific spice is slightly suppressed, and the balance of aromas and flavors is slightly good.

3 Points: The aroma or flavor of the specific spice is suppressed, and the balance of aroma and flavor is good.

4 Points: The balance of aroma or flavor of the spice is very good.

(2) Evaluation Standard for Compatibility with Cuisine

The compatibility between a food material (mozzarella cheese) and a test liquid was tested. The present test was carried out with reference to the test method in the Journal of the Brewing Society of Japan published in 2019.

Mozzarella cheese was used as a food material and the compatibility with test liquids was evaluated. After eating and swallowing the mozzarella cheese, the residual feeling of the flavor of the mozzarella cheese in the mouth and the compatibility with each test liquid when various test liquids were put in the mouth, and the savor of the test liquid when the test liquid was put in the mouth were evaluated by a 4-point method shown below. A case where the average point was less than 2.5 points was denoted as "×", a case where the average point was 2.5 points or more and less than 3.0 points was denoted as "△", a case where the average point was 3 points or more and less than 3.7 points was denoted as "○", and a case where the average point was 3.7 points or more was denoted as "◎". In a case where the average point was particularly noticeable, a comment (in the Note section) was added.

1 Point: Not good match for cuisine.

2 Points: No effect on cuisine (no change).

3 Points: Good match for cuisine.

4 Points: Very good match for cuisine.

(3) Overall Evaluation

In a case where the evaluations of both (1) and (2) were the same, the overall evaluations were denoted as the same symbol, and for example, in a case where both companies were "◎", the overall evaluation was denoted as "◎". In addition, in a case where the evaluations of (1) and (2) were different, the overall evaluation is denoted as the lower evaluation symbol, and for example, in a case where (1) was "○" and (2) was "△", the overall evaluation was denoted as "△".

<Preparation of Non-Alcoholic Beverage>

[Test 1: Effect of Adding Cinnamon to Beverage Raw Material]

The contents of a test in which the formulation amount of the cinnamon was changed with respect to the formulation amounts of star anise, black pepper, and dried bonito flakes, which were raw materials, are shown in Table 1.

A spice and the dried bonito flake powder as raw materials were mixed with the preparation water, filled in an aluminum laminate bag having retort resistance, sealed, and then heated at 121°C for 20 minutes (Fo = 20). Next, each test liquid was filtered through filter paper that had been cooled to room temperature after heating, to prepare each test liquid (Test Examples 1 to 11) which was a beverage, and a sensory test of each test liquid was performed.

The formulation of the raw materials and the results of the sensory evaluation of Test 1 are shown in Table 1 below.

[Table 1]

| | Text Example 1 | Text Example 2 | Text Example 3 | Text Example 4 | Text Example 5 | Text Example 6 | Text Example 7 | Text Example 8 | Text Example 9 | Text Example 10 | Text Example 11 |
|---|---|---|---|---|---|---|---|---|---|---|---|
| Heat treatment time at 120°C | 20 min | 20 min | 20 min | 20 min | 20 min | 20 min | 20 min | 20 min | 20 min | 20 min | 20 min |
| Form of raw materials | Whole form | Whole form | Whole form | Whole form | Whole form | Whole form | Whole form | Whole form | Whole form | Whole form | Whole form |
| A: Star anise (g) | 1 | 1 | 1 | 1 | 1 | 1 | 1 | 1 | 1 | 1 | 1 |
| B: Cinnamon (g) | 3.8 | 4.5 | 3.8 | 2.8 | 2 | 1 | 0.5 | 0.2 | 0.05 | 0.02 | 0 |
| C: Black pepper (g) | 4 | 4 | 4 | 3.5 | 2 | 1.5 | 1.5 | 1.5 | 1.5 | 1.5 | 1.5 |
| D: Bonito flake powder (g) | 0 | 0.1 | 0.1 | 0.1 | 0.1 | 0.1 | 0.1 | 0.1 | 0.1 | 0.1 | 0.1 |
| E: Preparation water (ml) | 144 | 143.2 | 143.9 | 145.4 | 147.7 | 149.2 | 149.7 | 150.0 | 150.2 | 150.2 | 150.2 |
| F: Total amount of entire raw materials (A+B+C+D+E) (g) | 152.8 | 152.8 | 152.8 | 152.8 | 152.8 | 152.8 | 152.8 | 152.8 | 152.8 | 152.8 | 152.8 |
| G: Total amount of raw materials (A+B+C+D) (g) | 8.8 | 9.6 | 8.9 | 7.4 | 5.1 | 3.6 | 3.1 | 2.8 | 2.7 | 2.6 | 2.6 |
| G/F (%) | 5.8 | 6.3 | 5.8 | 4.8 | 3.3 | 2.4 | 2.0 | 1.8 | 1.7 | 1.7 | 1.7 |
| Ratio of raw materials (A:B:C:D with respect to 1 of star anise) | - | 1 : 4.5 : 4 : 0.1 | 1 : 3.8 : 4 : 0.1 | 1 : 2.8 : 3.5 : 0.1 | 1 : 2 : 2 : 0.1 | 1 : 1 : 1.5 : 0.1 | 1 : 0.5 : 1.5 : 0.1 | 1 : 0.2 : 1.5 : 0.1 | 1 : 0.05 : 1.5 : 0.1 | 1 : 0.02 : 1.5 : 0.1 | 1 : 0 : 1.5 : 0.1 |
| Aroma | 4.0 | 1.0 | 3.3 | 3.3 | 3.7 | 4.0 | 3.7 | 3.3 | 3.3 | 3.0 | 2.7 |
| Taste | 4.0 | 1.0 | 3.3 | 3.0 | 3.7 | 4.0 | 4.0 | 4.0 | 4.0 | 3.7 | 3.0 |
| Total point of aroma and taste | 8.0 | 2.0 | 6.7 | 6.3 | 7.3 | 8.0 | 7.7 | 7.3 | 7.3 | 6.7 | 5.7 |
| Evaluation of aroma and taste | ◎ | × | ○ | ○ | ◎ | ◎ | ◎ | ◎ | ◎ | ○ | ○ |
| Compatibility with cuisine | 4.0 | 1.0 | 3.0 | 3.3 | 3.7 | 4.0 | 3.7 | 4.0 | 3.7 | 3.0 | 3.0 |
| Evaluation of compatibility with cuisine | ◎ | × | ○ | ○ | ◎ | ◎ | ◎ | ◎ | ◎ | ○ | ○ |
| Overall evaluation | ◎ | × | ○ | ○ | ◎ | ◎ | ◎ | ◎ | ◎ | ○ | ○ |
| Note | The cinnamon is perceived as slightly strong, but the balance of the respective spice aromas is well harmonized. The taste in the mouth is good, and the aftertaste is long-lasting. | The aroma of the cinnamon is excessively strong, resulting in a poor balance of flavors. The compatibility with a cuisine is also poor. | The aromas of the cinnamon and the bonito flakes are perceived, and the balance of flavors is moderately good. The compatibility with a cuisine is not poor. | The aromas of the bonito flakes and the cinnamon are suppressed, resulting in a good balance. A pepper flavor is slightly perceived, and although sweetness is perceived as the taste, the balance is good. | The flavors of the bonito flakes and the cinnamon are perceived, but the balance of aromas or tastes is excellent. The compatibility with a cuisine is good. | In both the aroma and the taste, the flavor of the cinnamon is perceived, but the balance is good. The compatibility with a cuisine is good. | The flavors of the bonito flakes and the cinnamon are slightly perceived, but the balance of flavors is excellent. The compatibility with a cuisine is good. | The aromas of the bonito flakes and the cinnamon are perceived, but the balance of flavors is excellent. The compatibility with a cuisine is moderately good. | The aroma of the bonito flakes is perceived, but the balance is excellent. The compatibility with a cuisine is good. | The aroma of bonito flakes is well-balanced, but the overall aroma is slightly mild. A gentle umami of the bonito flakes is perceived, giving a clean impression. The compatibility with a cuisine is good. | The aroma of the bonito flakes is present, and while the overall aroma is pure, the flavor is slightly weak. The compatibility with a cuisine is moderately good. |

Examples of the present invention are Test Examples 3 to 11, and Reference Example and Comparative Example are Test Examples 1 and 2.

In Test Example 11 in which cinnamon was not added, the flavor was slightly weak, but the compatibility with a cuisine was good. As raw materials of the beverage, spices of star anise and black pepper, and dried bonito flakes are essential, and the balance of flavors is evaluated to be high when the ratios of the raw materials are as follows: 1 part by weight of the star anise, 1 to 5 parts by weight of the black pepper, and 0.05 to 0.2 parts by weight of the dried bonito flake powder. It is preferable that the star anise and the black pepper are not powdered but are in a whole form.

From the results of Test 1 regarding an effect of the addition of cinnamon, cinnamon was evaluated to be high with a score of 4 or less with respect to the star anise 1. When dried bonito flakes are added, the amount of cinnamon can be reduced to a minimum necessary amount, but the flavor is evaluated to be higher with the addition of cinnamon. The balance of flavors and the compatibility with a cuisine are evaluated to be high when the ratios of the raw materials are as follows: 1 part by weight of the star anise, 1 to 5 parts by weight of the black pepper, 0.05 to 0.2 parts by weight of the bonito flakes, and 0 to 4 parts by weight of the cinnamon.

[Test 2: Amount of Black Pepper Added to Base Liquid Raw Materials]

The contents of a test in which the formulation amount of the black pepper was changed with respect to the formulation amounts of the star anise, the dried bonito flakes, and the cinnamon, which were raw materials, are shown in Table 2.

Each test liquid (Test Examples 2, 7, and 11, and Test Examples 12 to 22) was prepared by the same preparation method as in Test 1, and a sensory test was performed.

The evaluator, the sensory test method, and the sensory evaluation method were the same as in Test 1, and when the evaluators performed the test, the evaluator compared the balance of flavors using Test Examples 2, 7, and 11 described in Table 3 and compared the compatibility with the mozzarella cheese in advance.

Furthermore, the evaluators, the sensory test methods, and the sensory evaluation methods in the following Tests 3 to 5 are also the same as in Test 1.

The formulation of the raw materials and the evaluation results of Test 2 are shown in Table 2 below.

[Table 2]

[Table 2-1]

| | Text Example 2 | Text Example 12 | Text Example 13 | Text Example 14 | Text Example 7 | Text Example 15 | Text Example 16 |
|---|---|---|---|---|---|---|---|
| Heat treatment time at 120°C | 20 min | 20 min | 20 min | 20 min | 20 min | 20 min | 20 min |
| Form of raw materials | Whole form | Whole form | Whole form | Whole form | Whole form | Whole form | Whole form |
| A: Star anise (g) | 1 | 1 | 1 | 1 | 1 | 1 | 1 |
| B: Cinnamon (g) | 4.5 | 2 | 1 | 0.5 | 0.5 | 0.5 | 0.5 |
| C: Black pepper (g) | 4 | 3 | 2 | 4 | 1.5 | 1 | 0.75 |
| D: Bonito flake powder (g) | 0.1 | 0.1 | 0.1 | 0.1 | 0.1 | 0.1 | 0.1 |
| E: Preparation water (ml) | 143.2 | 146.7 | 148.7 | 147.2 | 149.7 | 150.2 | 150.5 |
| F: Total amount of entire raw materials (A+B+C+D+E) (g) | 152.8 | 152.8 | 152.8 | 152.8 | 152.8 | 152.8 | 152.8 |
| G: Total amount of raw materials (A+B+C+D) (g) | 9.6 | 6.1 | 4.1 | 5.6 | 3.1 | 2.6 | 2.4 |
| G/F (%) | 6.3 | 4.0 | 2.7 | 3.7 | 2.0 | 1.7 | 1.5 |
| Ratio of raw materials (A:B:C:D with respect to 1 of star anise) | 1 : 4.5 : 4 : 0.1 | 1 : 2 : 3 : 0.1 | 1 : 1 : 2 : 0.1 | 1 : 0.5 : 4 : 0.1 | 1 : 0.5 : 1.5 : 0.1 | 1 : 0.5 : 1 : 0.1 | 1 : 0.5 : 0.7 : 0.1 |
| Aroma | 1.0 | 2.7 | 3.0 | 2.7 | 4.0 | 3.0 | 2.7 |
| Taste | 1.7 | 2.7 | 3.0 | 3.0 | 4.0 | 3.0 | 2.7 |
| Total point of aroma and taste | 2.7 | 5.3 | 6.0 | 5.7 | 8.0 | 6.0 | 5.3 |
| Evaluation of aroma and taste | × | △ | ○ | ○ | ◎ | ○ | △ |
| Compatibility with cuisine | 1.3 | 3.3 | 3.0 | 3.0 | 3.7 | 3.0 | 2.7 |
| Evaluation of compatibility with cuisine | × | ○ | ○ | ○ | ◎ | ○ | △ |
| Overall evaluation | × | △ | ○ | ○ | ◎ | ○ | △ |
| Note | The aroma of the cinnamon is excessively strong, resulting in a poor balance of flavors. The compatibility with a cuisine is also poor. | The aroma of the bonito flakes is perceived, but the balance of flavors is moderately good. The compatibility with a cuisine is good. | The aroma of the bonito flakes is suppressed, resulting in a good balance. A slight flavor of peppery is perceived, and although sweetness is perceived as the taste, the balance is good. | The flavor of the bonito flakes is slightly perceived, but the balance of aromas or tastes is good. The compatibility with a cuisine is good. | The flavors of the bonito flakes and the cinnamon are slightly perceived, but the balance of flavors is excellent. The compatibility with a cuisine is good. | The flavor of the bonito flakes is present, but the balance of aromas or tastes is good. The compatibility with a cuisine is good. | The flavor of the bonito flakes is slightly strong, but the balance of aromas or tastes is moderately good. The compatibility with a cuisine is moderately good. |

[Table 2-2]

| | Text Example 17 | Text Example 18 | Text Example 19 | Text Example 20 | Text Example 21 | Text Example 11 | Text Example 22 |
|---|---|---|---|---|---|---|---|
| Heat treatment time at 120°C | 20 min | 20 min | 20 min | 20 min | 20 min | 20 min | 20 min |
| Form of raw materials | Whole form | Whole form | Whole form | Whole form | Whole form | Whole form | Whole form |
| A: Star anise (g) | 1 | 1 | 1 | 1 | 1 | 1 | 1 |
| B: Cinnamon (g) | 0.1 | 0.1 | 0.05 | 0 | 0 | 0 | 0 |
| C: Black pepper (g) | 2 | 1 | 1.5 | 0.75 | 1 | 1.5 | 4.0 |
| D: Bonito flake powder (g) | 0.1 | 0.1 | 0.1 | 0.1 | 0.1 | 0.1 | 0.1 |
| E: Preparation water (ml) | 149.6 | 150.6 | 150.2 | 151.0 | 150.7 | 150.2 | 147.7 |
| F: Total amount of entire raw materials (A+B+C+D+E) (g) | 152.8 | 152.8 | 152.8 | 152.8 | 152.8 | 152.8 | 152.8 |
| G: Total amount of raw materials (A+B+C+D) (g) | 3.2 | 2.2 | 2.7 | 1.9 | 2.1 | 2.6 | 5.1 |
| G/F (%) | 2.1 | 1.4 | 1.7 | 1.2 | 1.4 | 1.7 | 3.3 |
| Ratio of raw materials (A:B:C:D with respect to 1 of star anise) | 1 : 0.1 : 2 : 0.1 | 1 : 0.1 : 1 : 0.1 | 1 : 0.05 : 1.5 : 0.1 | 1 : 0 : 0.7 : 0.1 | 1 : 0 : 1 : 0.1 | 1 : 0 : 1.5 : 0.1 | 1 : 0 : 4 : 0.1 |
| Aroma | 2.7 | 2.7 | 2.3 | 2.3 | 2.7 | 2.7 | 3.0 |
| Taste | 3.3 | 3.0 | 3.0 | 2.7 | 3.0 | 3.0 | 4.0 |
| Total point of aroma and taste | 6.0 | 5.7 | 5.3 | 5.0 | 5.7 | 5.7 | 7.0 |
| Evaluation of aroma and taste | ○ | ○ | △ | △ | ○ | ○ | ○ |
| Compatibility with cuisine | 3.3 | 3.3 | 2.7 | 2.7 | 3.3 | 3.0 | 3.3 |
| Evaluation of compatibility with cuisine | ○ | ○ | △ | △ | ○ | ○ | ○ |
| Overall evaluation | ○ | ○ | △ | △ | ○ | ○ | ○ |
| Note | The flavor of the bonito flakes is perceived, but the balance of aromas or tastes is moderately good. The compatibility with a cuisine is good. | The flavor of the bonito flakes is slightly strong, but the balance of aromas or tastes is good. The compatibility with a cuisine is good. | The intensity of the aroma is slightly diminished, but the balance is moderately good. The compatibility with a cuisine is also moderately good. | The flavor of the bonito flakes is present, but the balance of aromas or tastes is moderately good. The compatibility with a cuisine is moderately good. | The flavor of the bonito flakes is perceived, but the balance of flavors is good. The compatibility with a cuisine is good. | The overall aroma is slightly weak, but the balance of flavors is also perceived as slightly weak. The compatibility with a cuisine is moderately good. | The peppery flavor is perceived, but the balance is good. The compatibility with a cuisine is good. |

From the results shown in Table 2, it was found that the balance of flavors and the compatibility with a cuisine of the black pepper were good, with the amount of the black pepper being in a range of 0.5 to 5 parts by weight with respect to 1 part by weight of the star anise.

From Test 1 and Test 2, it is preferable that the amount of the cinnamon is 4 parts by weight or less and the amount of the black pepper is in a range of 0.5 to 5 parts by weight.

[Test 3: Addition Amount of Dried Bonito Flake Powder of Beverage Raw Materials]

The contents of a test in which the formulation amount of the dried bonito flake powder was changed with respect to the formulation amounts of the star anise, the black pepper, and the cinnamon, which were raw materials, are shown in Table 3.

Each test liquid (Test Examples 3, 5, and 6, and Test Examples 23 to 31) was prepared by the same preparation method as in Test 1, and a sensory test was performed. In the test, the balance of flavors was adjusted and the compatibility was adjusted using cheese in advance, using Test Examples 3, 5, and 6. The results are shown in Table 3.

[Table 3]

[Table 3-1]

| | Text Example 23 | Text Example 3 | Text Example 24 | Text Example 5 | Text Example 25 |
|---|---|---|---|---|---|
| Heat treatment time at 120°C | 20 min | 20 min | 20 min | 20 min | 20 min |
| Form of raw materials | Whole form | Whole form | Whole form | Whole form | Whole form |
| A: Star anise (g) | 1 | 1 | 1 | 1 | 1 |
| B: Cinnamon (g) | 3.8 | 3.8 | 2 | 2 | 2 |
| C: Black pepper (g) | 4 | 4 | 2 | 2 | 1 |
| D: Bonito flake powder (g) | 0.36 | 0.1 | 0.2 | 0.1 | 0.1 |
| E: Preparation water (ml) | 143.6 | 143.9 | 147.6 | 147.7 | 148.8 |
| F: Total amount of entire raw materials (A+B+C+D+E) (g) | 152.8 | 152.8 | 152.8 | 152.8 | 152.8 |
| G: Total amount of raw materials (A+B+C+D) (g) | 9.2 | 8.9 | 5.2 | 5.1 | 4.1 |
| G/F (%) | 6.0 | 5.8 | 3.4 | 3.3 | 2.7 |
| Ratio of raw materials (A:B:C:D with respect to 1 of star anise) | 1:3.8:4:0.36 | 1:3.8:4:0.1 | 1:2:2:0.2 | 1:2:2:0.1 | 1:2:1:0.05 |
| Aroma | 2.7 | 3.3 | 3.7 | 3.7 | 3.0 |
| Taste | 2.7 | 3.3 | 3.3 | 3.7 | 3.0 |
| Total point of aroma and taste | 5.3 | 6.7 | 7.0 | 7.3 | 6.0 |
| Evaluation of aroma and taste | △ | ○ | ○ | ◎ | ○ |
| Compatibility with cuisine | 2.7 | 3.0 | 3.3 | 3.7 | 3.0 |
| Evaluation of compatibility with cuisine | △ | ○ | ○ | ◎ | ○ |
| Overall evaluation | △ | ○ | ○ | ◎ | ○ |
| Note | The aroma of the bonito flakes is perceived as strong, but the balance of tastes is moderately good. The compatibility with a cuisine is slightly poor. | The aromas of the cinnamon and the bonito flakes are perceived, but the balance of flavors is moderately good. The compatibility with a cuisine is not poor. | The aroma of the bonito flakes is perceived, but the balance of aromas or tastes is good. The compatibility with a cuisine is good. | The flavors of the bonito flakes and the cinnamon are slightly perceived, but the balance of aromas or tastes is excellent. The compatibility with a cuisine is good. | The flavor of the cinnamon is perceived, but the balance of flavors is good. The compatibility with a cuisine is good. |

[Table 3-2]

| | Text Example 26 | Text Example 27 | Text Example 28 | Text Example 6 | Text Example 29 | Text Example 30 | Text Example 31 |
|---|---|---|---|---|---|---|---|
| Heat treatment time at 120°C | 20 min | 20 min | 20 min | 20 min | 20 min | 20 min | 20 min |
| Form of raw materials | Whole form | Whole form | Whole form | Whole form | Whole form | Whole form | Whole form |
| A: Star anise (g) | 1 | 1 | 1 | 1 | 1 | 1 | 1 |
| B: Cinnamon (g) | 1 | 1 | 1 | 1 | 1 | 0.2 | 0.2 |
| C: Black pepper (g) | 1.5 | 1.5 | 1.5 | 1.5 | 1.5 | 1 | 2.5 |
| D: Bonito flake powder (g) | 0.4 | 0.3 | 0.2 | 0.1 | 0.05 | 0.2 | 0.25 |
| E: Preparation water (ml) | 148.9 | 149.0 | 149.1 | 149.2 | 149.3 | 150.4 | 148.9 |
| F: Total amount of entire raw materials (A+B+C+D+E) (g) | 152.8 | 152.8 | 152.8 | 152.8 | 152.8 | 152.8 | 152.8 |
| G: Total amount of raw materials (A+B+C+D) (g) | 3.9 | 3.8 | 3.7 | 3.6 | 3.6 | 2.4 | 4.0 |
| G/F (%) | 2.6 | 2.5 | 2.4 | 2.4 | 2.3 | 1.6 | 2.6 |
| Ratio of raw materials (A:B:C:D with respect to 1 of star anise) | 1:1:1.5:0.4 | 1:1:1.5:0.3 | 1:1:1.5:0.2 | 1:1:1.5:0.1 | 1:1:1.5:0.05 | 1:0.2:1:0.2 | 1:0.2:2.5:0.25 |
| Aroma | 2.7 | 3.0 | 4.0 | 4.0 | 2.3 | 3.0 | 2.3 |
| Taste | 2.3 | 3.0 | 3.3 | 4.0 | 2.7 | 3.7 | 3.3 |
| Total point of aroma and taste | 5.0 | 6.0 | 7.3 | 8.0 | 5.0 | 6.7 | 5.7 |
| Evaluation of aroma and taste | △ | ○ | ◎ | ◎ | △ | ○ | ○ |
| Compatibility with cuisine | 2.7 | 3.0 | 3.7 | 4.0 | 2.7 | 3.3 | 3.3 |
| Evaluation of compatibility with cuisine | △ | ○ | ◎ | ◎ | △ | ○ | ○ |
| Overall evaluation | △ | ○ | ◎ | ◎ | △ | ○ | ○ |
| Note | The flavor of the bonito flakes is strong, but the balance is moderately good. The compatibility with a cuisine is moderately good. | The flavor of the bonito flakes is slightly strong, but the balance is good. The compatibility with a cuisine is good. | The balance of flavors is excellent. The compatibility with a cuisine is good. | The balance of flavors is excellent. The compatibility with a cuisine is excellent. | In both the aroma and the taste, the flavor of the cinnamon is slightly perceived, but the balance is good. The compatibility with a cuisine is good. | The flavor of the bonito flakes is perceived, but the balance of aroma is good. The compatibility with a cuisine is good. | The flavored taste of the pepper is perceived, but the balance of aroma or taste is good. The compatibility with a cuisine is good. |

From the results shown in Table 3, it was found that the balance of flavors and the compatibility with a cuisine of the black pepper were good, with the amount of the dried bonito flake powder being in a range of 0.03 to 0.4 parts by weight with respect to 1 part by weight of the star anise.

From Tests 1 to 3, it is suitable that the amount of the black pepper is in a range of 0.5 to 5 parts by weight, the amount of the dried bonito flake powder is 0.03 to 0.4 parts by weight, and the cinnamon is 4 parts by weight or less as a whole.

[Test 4: Compatibility with Cuisine Other than Mozzarella Cheese]

The same test liquids (Test Examples 2, 7, and 12 to 18) as in Test 1 were used.

The evaluation was performed in the same manner as in Test 1 using the samples described in the Journal of the Brewing Society of Japan (2019), Vol, 114, p. 166-173. The evaluation was carried out by three well-trained sensory evaluators (including one sommelier). In the test, the compatibility with the food material was compared in advance using Test Example 7 shown in Table 2. The results are shown in Table 4.

[Table 4]

| | | | Text Example 2 | Text Example 12 | Text Example 13 | Text Example 14 | Text Example 15 | Text Example 7 | Text Example 16 | Text Example 17 |
|---|---|---|---|---|---|---|---|---|---|---|
| Compatibility with cuisine | Light and refreshing type | Yakitori: salted chicken thigh meat | 1.0 | 2.7 | 3.3 | 1.3 | 3.0 | 4.0 | 3.3 | 2.7 |
| | | | × | Δ | ○ | × | ○ | ◎ | ○ | Δ |
| | | Salt-grilled horse mackerel | 1.0 | 3.3 | 3.3 | 1.0 | 3.7 | 4.0 | 3.3 | 3.3 |
| | | | × | ○ | ○ | × | ◎ | ◎ | ○ | ○ |
| | Full-bodied style | Yakitori: chicken liver with tare sauce | 2.7 | 2.7 | 3.7 | 1.7 | 3.3 | 4.0 | 4.0 | 2.7 |
| | | | Δ | Δ | ◎ | × | ○ | ◎ | ◎ | Δ |
| | | Marinated fried horse mackerel | 2.7 | 3.3 | 3.3 | 2.0 | 3.7 | 4.0 | 3.3 | 2.7 |
| | | | Δ | ○ | ○ | × | ◎ | ◎ | ○ | Δ |
| Overall evaluation | | | × | Δ | ○ | × | ○ | ◎ | ○ | Δ |

Reference: The Journal of the Japanese Brewery Society of Japan (2019), Vol. 114, p. 166-173, Compatibility between alcohol and cuisine

It was found that in the red wine-flavored non-alcoholic beverages that have a good balance of the spices and the bonito flake flavor, and have a strong flavor, a matching effect thereof with various food materials is high.

In Test Example 14, the compatibility with mozzarella cheese was good, but the compatibility with cuisines other than the mozzarella cheese was not good.

[Test 5: Dilution Liquid for Beverage (Water or Fruit Juice)]

As a red wine-style non-alcoholic beverage, the test liquid of Test Example 7 of Test 1 was used. The test liquid of Test Example 7 was diluted with water or a grape juice to obtain Test Examples 32 to 37.

The test liquid was evaluated for the aroma (balance of spices and a fruit juice aroma) and the taste (taste derived from the test liquid). In addition, the compatibility with a cuisine was evaluated using yakitori (salted chicken thigh meat) in the same manner as in Test 1 to determine whether or not the compatibility was good. The results are shown in Table 5.

[Table 5]

| | Text Example 7 | Text Example 32 | Text Example 33 | Text Example 34 | Text Example 35 | Text Example 36 | Text Example 37 |
|---|---|---|---|---|---|---|---|
| Red wine-style non-alcoholic drink base liquid (g) | 100 | 100 | 100 | 100 | 100 | 100 | 100 |
| Water | 0 | 50 | 100 | 150 | 0 | 0 | 0 |
| Grape juice | 0 | 0 | 0 | 0 | 50 | 100 | 150 |
| Ratio of base liquid to dilution liquid | 1:0 | 1:0.5 | 1:1 | 1:1.5 | 1:0.5 | 1:1 | 1:1.5 |
| Aroma | 4.0 | 4.0 | 4.0 | 2.7 | 3.7 | 3.7 | 2.3 |
| Taste | 4.0 | 4.0 | 3.7 | 2.7 | 3.7 | 4.0 | 2.7 |
| Total point of aroma and taste | 8.0 | 8.0 | 7.7 | 5.3 | 7.3 | 7.7 | 5.0 |
| Evaluation of aroma and taste | ◎ | ◎ | ◎ | △ | ◎ | ◎ | △ |
| Compatibility with cuisine | 4.0 | 4.0 | 4.0 | 2.7 | 4.0 | 4.0 | 2.7 |
| Evaluation of compatibility with cuisine | ◎ | ◎ | ◎ | △ | ◎ | ◎ | △ |
| Overall evaluation | ◎ | ◎ | ◎ | △ | ◎ | ◎ | △ |
| Note | The flavors of the bonito flakes and the cinnamon are slightly perceived, but the balance is also good. The compatibility with a food material is excellent. | The flavored taste of the spices is slightly strong. The compatibility with a food material is good. | The flavored taste of the spices is perceived, but the balance of flavors is good. The compatibility with a food material is good. | The balance with the flavored taste is moderately good. There is compatibility with a food material. | There is a juicy feel, but there is also the flavor of the spices or the bonito flakes, leading to a good balance with a fruit juice. The compatibility with a food material is good. | The flavored taste of the spices or the bonito flakes is perceived, but the balance with a fruit juice is excellent. The compatibility with a food material is good. | The juicy feel is strong, but the flavor of the spices or the bonito flakes are weak. Due to the weak flavored taste of the spices, the compatibility with a food material is also slightly perceived. |

Even when the beverage is diluted with water or a fruit juice, the balance of red wine flavor and the compatibility with a cuisine are good, but a two-fold or greater dilution of the beverage weakens the spice flavor and enhances the perception of the fruit juice.

In a case where 1.5 or less of water or a grape juice is added to 1 of the beverage, a red wine-style non-alcoholic drink having good compatibility with a cuisine is obtained.

**Claims**

1. A method for producing a non-alcoholic beverage, the method comprising:
   subjecting immersion mixed water obtained by immersing raw materials including star anise, black pepper, and dried bonito flakes in water to heated extraction, and then to solid-liquid separation.

2. The production method according to Claim 1,
   wherein the heated extraction is performed at 80°C to 130°C.

3. The production method according to Claim 1,
   wherein the heated extraction is performed in a sealed container.

4. The production method according to Claim 1,
   wherein the raw materials include 0.5 to 5 parts by weight of the black pepper and 0.03 to 0.4 parts by weight of the dried bonito flakes with respect to 1 part by weight of the star anise.

5. The production method according to Claim 1,
   wherein the raw materials further include cinnamon.

6. The production method according to Claim 5,

   wherein the star anise, the cinnamon, and the black pepper of the raw materials are dried whole spices, and the dried bonito flakes are powdered.

7. The production method according to Claim 1,
   wherein the non-alcoholic beverage acquires a wine flavor upon addition of a fruit juice.

8. A non-alcoholic beverage comprising:
   a heated water extract liquid of raw materials including star anise, black pepper, and dried bonito flakes.

9. The non-alcoholic beverage according to Claim 8,
   wherein the raw materials further include cinnamon.

10. A wine-flavored non-alcoholic beverage comprising:

    the non-alcoholic beverage according to Claim 8; and
    a fruit juice.

## INTERNATIONAL SEARCH REPORT

| International application No. |
|---|
| **PCT/JP2024/018288** |

| **A. CLASSIFICATION OF SUBJECT MATTER** |
|---|
| *A23L 27/00*(2016.01)i; *A23L 2/00*(2006.01)i; *A23L 2/02*(2006.01)i; *A23L 2/385*(2006.01)i<br>FI:   A23L27/00 C; A23L2/02 A; A23L2/385; A23L2/00 H |
| According to International Patent Classification (IPC) or to both national classification and IPC |

| **B. FIELDS SEARCHED** |
|---|
| Minimum documentation searched (classification system followed by classification symbols)<br>     A23L27/00; A23L2/00; A23L2/02; A23L2/385 |
| Documentation searched other than minimum documentation to the extent that such documents are included in the fields searched<br><br>     Published examined utility model applications of Japan 1922-1996<br>     Published unexamined utility model applications of Japan 1971-2024<br>     Registered utility model specifications of Japan 1996-2024<br>     Published registered utility model applications of Japan 1994-2024 |
| Electronic data base consulted during the international search (name of data base and, where practicable, search terms used) |

| **C. DOCUMENTS CONSIDERED TO BE RELEVANT** | | |
|---|---|---|
| Category* | Citation of document, with indication, where appropriate, of the relevant passages | Relevant to claim No. |
| A | クックパッド [online], 26 July 2016 [retrieved on 24 February 2023], Internet: <URL: https://cookpad.com/recipe/3994209>, (Cookpad) | 1-10 |
| A | お気に入りのスパイスミルで作るハーブティー-(チャイ)-Yoko Design Kitchen [online], 19 March 2015 [retrieved on 24 February 2023], Internet: <URL: https://www.yokodesign.com/%E3%81%8A%E6%B0%97%E3%81%AB%E5%85%A5%E3%82%8A%E3%81%AE%E3%82%B9%E3%83%91%E3%82%A4%E3%82%B9%E3%83%9F%E3%83%AB%E3%81%A7%E4%BD%9C%E3%82%8B%E3%83%8F%E3%83%BC%E3%83%96%E3%83%86%E3%82%A3%E3%83%BC%EF%BC%88/>, non-official translation (Herbal tea (chai) made with your favorite spice mill) | 1-10 |
| A | スパイスがあったら作りたい!本場のチャイの作り方-Yuki's Small Kitchen [online], 27 July 2020 [retrieved on 24 February 2023], Internet: <URL: https://yuki-kitchen.tokyo/archives/4233>, non-official translation (I want to make it if I have the spices! How to make authentic chai) | 1-10 |
| A | クックパッド [online], 16 May 2023 [retrieved on 27 July 2023], Internet:<URL:https://cookpad.com/recipe/7498978>, (Cookpad) | 1-10 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 June 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 717 095 A1**

## INTERNATIONAL SEARCH REPORT

International application No.

**PCT/JP2024/018288**

### C. DOCUMENTS CONSIDERED TO BE RELEVANT

| Category* | Citation of document, with indication, where appropriate, of the relevant passages | Relevant to claim No. |
|---|---|---|
| A | クックパッド [online], 01 December 2016 [retrieved on 27 July 2023], Internet: <URL: https://cookpad.com/recipe/4196514>, (Cookpad) | 1-10 |
| P, A | JP 7311676 B1 (KIKKOMAN CORPORATION) 19 July 2023 (2023-07-19) | 1-10 |
| L | JP 7474366 B1 (KIKKOMAN CORPORATION) 24 April 2024 (2024-04-24)<br>(patent publications publishing the earlier domestic application claiming priority) | 1-10 |

Form PCT/ISA/210 (second sheet) (July 2022)

**INTERNATIONAL SEARCH REPORT**
Information on patent family members

International application No.

**PCT/JP2024/018288**

| Patent document cited in search report | Publication date (day/month/year) | Patent family member(s) | Publication date (day/month/year) |
|---|---|---|---|
| JP 7311676 B1 | 19 July 2023 | (Family: none) | |
| JP 7474366 B1 | 24 April 2024 | (Family: none) | |

Form PCT/ISA/210 (patent family annex) (July 2022)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4643083 A
- EP 58634 A
- JP 2011147386 A
- JP 5924919 B
- JP 7311676 B

**Non-patent literature cited in the description**

- *Journal of the Brewing Society of Japan*, 2019, vol. 114, 166-173
- *The Journal of the Japanese Brewery Society of Japan*, 2019, vol. 114, 166-173